(19) Europäisches Patentamt
European Patent Office
Office européen des brevets

(11) **EP 4 738 662 A1**

(12) **EUROPEAN PATENT APPLICATION**
published in accordance with Art. 153(4) EPC

(43) Date of publication:
06.05.2026 Bulletin 2026/19

(21) Application number: 24830196.2

(22) Date of filing: 11.05.2024

(51) International Patent Classification (IPC):
*H02K 3/46* (2006.01)   *H02K 3/52* (2006.01)
*H02K 29/00* (2006.01)

(86) International application number:
PCT/CN2024/092621

(87) International publication number:
WO 2025/001548 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 CN 202310792324

(71) Applicant: Xuxin Technology (Shenzhen) Group
Co., Ltd
Shenzhen, Guangdong 518042 (CN)

(72) Inventors:
• ZHANG, Ping
Shenzhen, Guangdong 518042 (CN)

• WU, Sin Hin
Shenzhen, Guangdong 518042 (CN)
• SUN, Xinglin
Shenzhen, Guangdong 518042 (CN)
• ZHOU, Huizhu
Shenzhen, Guangdong 518042 (CN)
• SUN, Yelin
Shenzhen, Guangdong 518042 (CN)
• LUO, Lanying
Shenzhen, Guangdong 518042 (CN)

(74) Representative: Bratovic, Nino Maria
Bratovic IP
Lissi-Kaeser-Straße 20
80797 München (DE)

(54) **BRUSHLESS MOTOR, MANUFACTURING METHOD THEREFOR AND APPARATUS**

(57)     The present disclosure relates to a brushless motor, a manufacturing method therefor and an apparatus. The brushless motor comprises: at least one stator core (1), each stator core (1) comprising a plurality of tooth groups (11) which are spaced apart in a circumferential direction thereof, and the total number of the tooth groups (11) being $Z$; a rotor (2), which can rotate relative to the stator core (1), the rotor (2) comprising a magnetic ring (21) having a pole number of $P$, and $P$ being an even number; and at least two-phase wires (3), which are wound around the tooth groups (11) to form coils (31) on the tooth groups (11), the total number of phases of the wires (3) being $X$, each phase wire (3) having an independent first end and second end, for the same phase wire, the number of tooth groups (11) spaced between coils (31) on two adjacent tooth groups (11) being $X$-1, winding directions of the coils (31) on the two adjacent tooth groups (11) in the circumferential direction of the tooth groups (11) being opposite, and $Z=P*X$.

Fig. 1

EP 4 738 662 A1

# Description

## TECHNICAL FIELD

The present disclosure relates to a brushless motor, a method for manufacturing the same, and an apparatus.

## BACKGROUND

Brushless direct current (DC) motors have the advantages of conventional DC motors while eliminating carbon brushes and slip rings, and enabling low-speed, high-power operation. They are not only compact and lightweight, but also offer excellent stability and high efficiency, making them widely used across various fields.

At present, although different types of brushless motors can basically meet the use requirements, it is still difficult to achieve good comprehensive performance, mainly because it is difficult to take into account all the various performance indicators, such as the torque and efficiency, and only the most important performance indicators can be preferentially guaranteed according to the use demands when selecting the motor type. Therefore, the comprehensive performance of brushless motors needs to be further improved to better meet the requirements of automatic driving.

## SUMMARY

Some embodiments of the present disclosure provide a brushless motor, a method for manufacturing the same, and an apparatus, which can improve the comprehensive performance of the brushless motor.

According to a first aspect of the present disclosure, there is provided a brushless motor including:

at least one stator core including a plurality of tooth groups arranged at intervals along its circumferential direction, the total number of the tooth groups being Z;
a rotor rotatable relative to the stator core and including a magnetic ring with P poles, P being an even number; and
at least two phase wires wound around the tooth groups to form their respective coils, the total number of phases of the phase wires being $X$, and each phase wire having an independent first end and second end; for the same phase wire, the number of tooth groups spaced between the coils on two adjacent tooth groups being X-1, and the winding directions of the coils on the two adjacent tooth groups along the circumferential direction of the tooth groups being opposite;
where Z=P*X.

In some embodiments, the tooth group includes a single tooth, and the wire is wound around the tooth to form a coil on the tooth; and/or the tooth group includes at least two teeth, the at least two teeth are arranged at intervals along the circumferential direction of the stator core, and the wire is wound around the at least two teeth to form a coil on the at least two teeth.

In some embodiments, each phase wire is configured to be applied with an independent driving signal.

In some embodiments, in a radial direction of the stator core, the winding direction of each coil formed by the at least two phase wires is the same.

In some embodiments, an initial winding position of each coil formed by the at least two phase wires is located on a side away from the rotor.

In some embodiments, in the radial direction of the stator core, both the first end and the second end of the at least two phase wires are led out from the same side of the tooth group.

In some embodiments, in the circumferential direction of the stator core, all the first ends and the second ends are led out from a plurality of adjacent tooth groups.

In some embodiments, for the at least two phase wires, winding directions of the coils with the same sequence number from the first end along the circumferential direction of the tooth groups are the same; or for at least one group of adjacent two phase wires, the winding directions of the coils with the same sequence number along the circumferential direction of the tooth groups from the first end are oppsite.

In some embodiments, the at least two phase wires are sequentially wound in a sequence from the first phase to a $X$-th phase along the circumferential direction of the stator core.

The wires applied with driving signals include an $i$-th phase wire and a $k$-th phase wire, and the phase difference between the driving signals to the $i$-th phase wire and the $k$-th phase wire is $\theta_{ik} = \frac{P}{2}\sum_{i}^{k-1}\beta_X$, where $1 \leq i < k \leq X$.

In the same stator core, a gap is present between the tooth group of the $x$-th phase wire and adjacent tooth groups on both sides at their closest positions, and the gap has a central position in the circumferential direction of the stator core. Among all gaps formed by the Z tooth groups, a central angle corresponding to an arc between a central position of the $x$-th phase wire and an adjacent central position in the circumferential direction of the stator core is $\beta_X$, and a sector corresponding to $\beta_X$ includes at least part of the tooth group of the $x$-th phase wire.

In some embodiments, a plurality of stator cores are stacked in an axial direction, and each stator core contains at least one phase wire. In the circumferential direction of the stator cores, the respective tooth groups of the plurality of stator cores are staggered.

In some embodiments, in the whole target rotational speed range of the rotor, the driving signals applied to all the phase wires have the same strength.

In some embodiments,

in a case where the target torque of the rotor is higher than a first preset torque, the driving signals applied to the various phase wires have the same strength; and

in a case where the target torque of the rotor is not higher than the first preset torque, the driving signals applied to some phase wires have a preset strength, and the driving signals applied to the other phase wires have a strength lower than the preset strength or these wires are not driven.

In some embodiments, the brushless motor has a first working mode, in which each phase wire is energized all the time, and there is a phase difference between the driving signals to adjacent phase wires.

In some embodiments, the brushless motor has a second working mode, in which each phase wire is energized intermittently, and there is a phase difference between the driving signals to adjacent phase wires.

In some embodiments, the magnetic ring is sleeved over the stator core.

In some embodiments, the stator core is annular and sleeved over the magnetic ring.

In some embodiments, the stator core and the magnetic ring are stacked along the axial direction, and the magnetic ring at least partially covers the coil along the radial direction of the stator core.

In some embodiments, both sides of the stator core along the axial direction are provided with magnetic rings; and/or
both sides of the magnetic ring along the axial direction are provided with stator cores.

According to a second aspect of the present disclosure, there is provided an apparatus including the brushless motor of the above embodiment.

According to a third aspect of the present disclosure, there is provided a manufacturing method for the brushless motor based on the above embodiment, including:

a wire supply step: providing a wire;
a winding step: winding the wire on tooth groups in a phase sequence until a coil is formed on each tooth group; where for all the coils in the same phase wire, the number of tooth groups spaced between the coils on two adjacent tooth groups is $X$-1, and the winding directions of the coils on two adjacent tooth groups along the circumferential direction of the tooth groups are opposite; and
a wire cutting step: cutting the wire at the joint of adjacent phase sequences, so that the total number of phases of the wire is $X$, and each phase wire has an independent first end and second end.

Based on the above technical solution, the present disclosure has at least the following beneficial effects: (1) the motor has an increased number of phases, so that it can realize a greater torque and be applied to high-power products; (2) the phase wires are independent from each other, which can realize independent power supply and driving, so that each phase wire can be energized all the time to cause the rotor to rotate, thereby improving the utilization of the winding and the stator core, and improving the ultimate working efficiency; energization of the phase wire does not need to be switched frequently, which can improve the working stability and reduce the working noise, and the force is uniform during steady-state driving, so that jitter is unlikely to occur inside the stator core, which can improve the working stability and overall service life of the motor; (3) the number of poles of the magnetic ring can be reduced, and for the same rotational speed and power, it is necessary to switch the energization twice to complete the rotation of a pair of poles, which can reduce the driving frequency and reduce the driving difficulty; (4) and the same phase wire is wound in sequence, and the winding method is simple, which can improve the automation degree of winding.

BRIEF DESCRIPTION OF DRAWINGS

The accompanying drawings described herein are used to provide further understanding of the present disclosure and constitute a part of the present disclosure. The illustrative embodiments of the present disclosure and descriptions thereof are used to explain the present disclosure and do not constitute undue limitations on the present disclosure. In the accompanying drawings:

Fig. 1 is a schematic diagram showing the mating between a stator core and a magnetic ring in a brushless motor according to a first embodiment of the present disclosure;
Fig. 2 is a schematic structural diagram showing the brushless motor with two phase wires being wound around the stator core according to the first embodiment of the present disclosure;
Fig. 3 is a schematic diagram of the working principle of a two-phase brushless motor according to the present disclosure;
Fig. 4 is a schematic diagram showing the mating between a stator core and a magnetic ring in a brushless motor according to a second embodiment of the present disclosure;
Fig. 5 is a schematic structural diagram showing the brushless motor with two phase wires being wound around the stator core according to the second embodiment of the present disclosure;
Fig. 6 is a schematic diagram showing continuous sine wave driving signals being applied to two phase wires in a brushless motor according to the present disclosure;

Fig. 7 is a schematic diagram showing discontinuous sine wave driving signals being applied to two phase wires in a brushless motor according to the present disclosure;

Fig. 8 is a schematic diagram showing square wave driving signals being applied to two phase wires in a brushless motor according to the present disclosure;

Fig. 9 is a schematic diagram showing the mating between a stator core and a magnetic ring in a brushless motor according to a third embodiment of the present disclosure;

Fig. 10 is a schematic structural diagram showing the brushless motor with three phase wires being wound around the stator core according to the third embodiment of the present disclosure;

Fig. 11 is a schematic diagram showing continuous sine wave driving signals being applied to all wires in a three-phase brushless motor according to the present disclosure;

Fig. 12 is a schematic diagram showing square wave driving signals being applied to all wires in a three-phase brushless motor according to the present disclosure;

Fig. 13 is a schematic diagram showing the mating between a stator core and a magnetic ring in a brushless motor according to a fourth embodiment of the present disclosure;

Fig. 14 is a schematic diagram showing continuous sine wave driving signals being applied to two phase wires in the fourth embodiment;

Fig. 15 is a schematic structural diagram showing a brushless motor with two phase wires being wound around a stator core according to a fifth embodiment of the present disclosure;

Fig. 16 is a schematic structural diagram of a magnetic ring in the fifth embodiment;

Fig. 17 is a schematic structural diagram showing the mating between a stator core and a rotor in the fifth embodiment;

Fig. 18 is a schematic structural diagram showing an alternative implementation of the mating between a stator core and a rotor in the fifth embodiment;

Fig. 19 is a schematic structural diagram showing an yet another alternative implementation of the mating between a stator core and a rotor in the fifth embodiment;

Fig. 20 is a sectional view of a brushless motor according to a sixth embodiment of the present disclosure;

Fig. 21 is a schematic structural diagram showing an X1 phase wire being wound around one of the stator cores in the sixth embodiment;

Fig. 22 is a schematic structural diagram showing an X2 phase wire being wound around the other stator core in the sixth embodiment; and

Fig. 23 is a schematic structural diagram showing two stator cores being stacked along an axial direction in the sixth embodiment.

Description of reference numerals:

1. Stator core; 11. Tooth group; 11'. Tooth; 111. Neck; 112. Shoe; 12. Yoke;
2. Rotor; 21. Magnetic ring; 22. Rotating shaft;
3. Wire; 31. Coil; 32. Connecting section; and
4. Connecting shaft.

## DETAILED DESCRIPTION

Various example embodiments of the present disclosure will now be described in detail with reference to the accompanying drawings. The description of the example embodiments is merely illustrative and in no way constitutes any limitation on the present disclosure, its applications, or its uses. The present disclosure may be implemented in many different forms and is not limited to the embodiments described herein. These embodiments are provided to make the present disclosure thorough and complete, and to fully convey the scope of the present disclosure to those having ordinary skills in the art. It should be noted that, unless otherwise specifically stated, the relative arrangement of components and steps, material compositions, numerical expressions, and values set forth in these embodiments shall be construed as merely illustrative and not as limiting.

The terms "first," "second," and similar terms used in the present disclosure do not indicate any order, quantity, or importance, but merely serve to distinguish between different components. Terms such as "include" or "comprise" mean that the element preceding the term encompasses the elements listed after the term and does not exclude the possibility of also encompassing other elements. Terms such as "upper," "lower," "left," and "right" are used only to indicate relative positional relationships, and when the absolute position of the described object changes, the relative positional relationship may correspondingly change.

In the present disclosure, when a specific device is described as being located between a first device and a second device, there may or may not be an intermediate device between the specific device and the first device or the second device. When a specific device is described as being connected to another device, the specific device may be directly connected to the other device without an intermediate device, or may not be directly connected to the other device but have an intermediate device.

All terms (including technical terms or scientific terms) used in the present disclosure have the same meanings as those understood by those having ordinary skills in the art to which the present disclosure pertains, unless otherwise specifically defined. It should also be understood that terms defined in, for example, general dictionaries should be construed as having meanings consistent with their meanings in the context of the relevant technology, and should not be interpreted in an idealized or overly formalized sense unless explicitly defined as such herein.

Technologies, methods, and devices known to those having ordinary skills in the relevant field may not be discussed in detail, but where appropriate, such technologies, methods, and devices shall be deemed part of the specification.

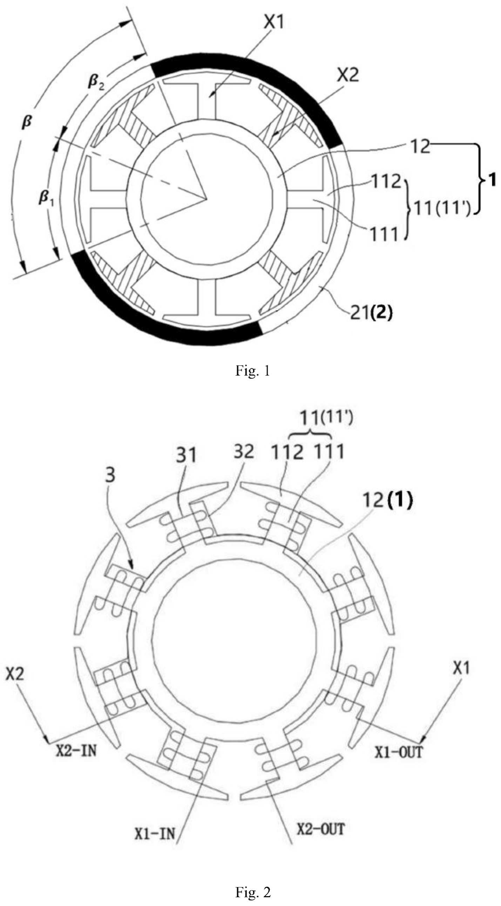

The present disclosure provides a brushless motor, hereinafter referred to as "motor" for short, which may be an electric motor for converting electrical energy into mechanical energy or a generator for converting mechanical energy into electrical energy. In some embodiments, as shown in Figs. 1 to 23, the motor includes:

at least one stator core 1 including a plurality of tooth groups 11 arranged at intervals along a circumferential direction of the at least one stator core 1, the total number of the tooth groups 11 being $Z$;
a rotor 2 rotatable relative to the stator core 1 and including a magnetic ring 21 with $P$ poles, P being an even number; and
at least two phase wires 3 wound around the tooth groups 11 to form coils 31 on the tooth groups 11, the total number of phases of the phase wires 3 being $X$, and each phase wire 3 having a first end and a second end independent of each other; for the same phase wire 3, the number of tooth groups 11 spaced between the coils 31 on two adjacent tooth groups 11 being $X$-1, and winding directions of the coils 31 on the two adjacent tooth groups 11 along a circumferential direction of the tooth groups 11 being opposite; where $Z=P*X$.

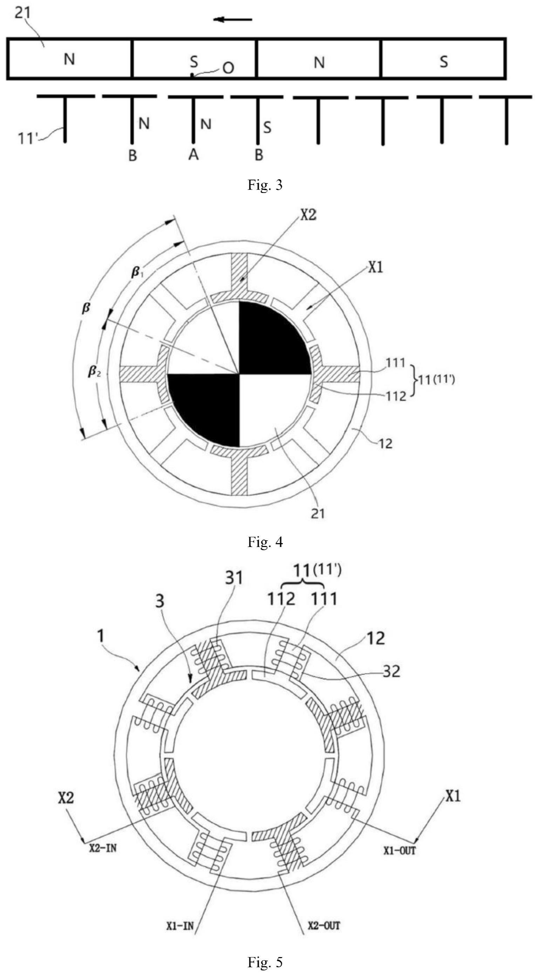

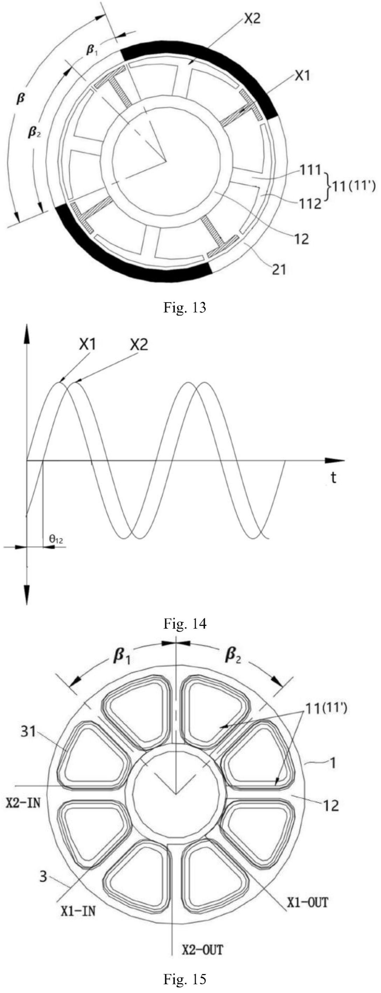

In this embodiment, one or at least two stator cores 1 can be provided, and each stator core 1 can include a yoke 12 and a plurality of tooth groups 11 connected to the yoke 12. In an example, the yoke 12 is annular, such as a circular ring. As shown in Fig. 1, the plurality of tooth groups 11 are connected onto an outer side wall of the yoke 12; as shown in Fig. 4, the plurality of tooth groups 11 are connected onto an inner side wall of the yoke 12; and as shown in Fig. 15, the plurality of tooth groups 11 are connected to an axial end of the yoke 12.

The total number of the tooth groups 11 is $Z$. In a case where there are at least two stator cores 1, the total number of the tooth groups 11 is the total number of the tooth groups 11 in all the stator cores 1. The tooth group 11 can include one or at least two teeth 11'. All the teeth 11' in each stator core 1 are arranged into tooth groups 11 according to the winding.

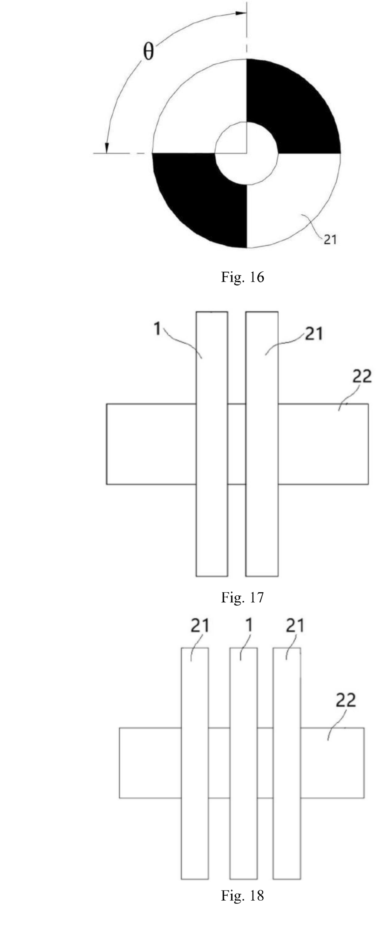

The rotor 2 and the stator core 1 can be coaxially arranged and the rotor 2 is rotatable relative to the stator core 1. Referring to Figs. 17 to 19, the rotor 2 can include a magnetic ring 21 and a rotating shaft 22. The rotating shaft 22 is connected to the magnetic ring 21 and configured for outputting the power of the motor. The number of poles $P$ of the magnetic ring 21 is an even number, with

$P{\geq}2$. For example, the number of poles $P$ of the magnetic ring 21 in Fig. 1 is 4, that is, the magnetic ring 21 has two pairs of poles, which are alternately arranged along the circumferential direction of the stator core 1 in an N-S-N-S pattern. In addition, the number of poles $P$ can alternatively be 6, 8, .... For different configurations, as shown in Fig. 1, the magnetic ring 21 is arranged outside the stator core 1; as shown in Fig. 4, the stator core 1 is annular, and the magnetic ring 21 is arranged within the stator core 1; and as shown in Fig. 16, the magnetic ring 21 and the stator core 1 are stacked axially.

At least two phase wires 3 are wound around the tooth groups 11 to form coils 31 on the tooth groups 11. The total number of phases of the phase wires 3 is $X$, that is, the stator core 1 has X independent wires 3 after winding, and each phase wire 3 has an independent first end and second end. For example, the first end is an input end and the second end is an output end, or vice versa. For each phase wire 3, coils 31 are formed on the corresponding tooth groups 11, and the coils 31 on two adjacent tooth groups 11 are connected by a connecting section 32, which can stride over the tooth groups 11 corresponding to other phase wires 3 from an end face of the stator core 1.

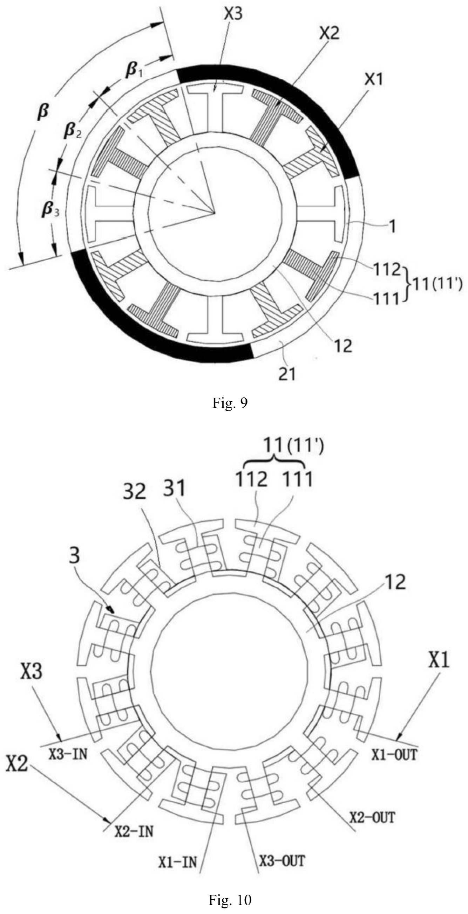

The phase wires 3 are denoted by X1, X2 .... respectively. The number of tooth groups 11 spaced between coils 31 on two adjacent tooth groups 11 is $X$-1, for the same phase wire. For example, two phase wires 3 are shown in Figs. 1 and 2, and each phase wire 3 is wound once every other tooth group 11 during winding. Figs. 9 and 10 show three phase wires 3, and each phase wire 3 is wound once every two adjacent tooth groups 11.

In terms of parameter selection, the number of poles $P$ of the magnetic ring 21 mainly depends on the design power of the motor. The greater the power, the more poles are needed, and the more poles, the greater the torque. The number of poles $P$ is also related to the motor configuration, and different considerations should be taken into account for an inner rotor and an outer rotor in determination of the poles, but the ultimate goal is to maximize the number and density of windings in a reasonable motor space to achieve the maximum output power of the motor. In addition, increasing the power can also increase the axial thickness of the magnet and the stator core 1 or the magnetic force of the magnet material. As for the number of phases $X$, a two-phase motor is generally selected to simplify the structure and reduce the driving difficulty, while in some application scenarios, the torque can be increased by increasing the number of phases $X$. For example, on electric bicycles, it is necessary to increase the torque of the motor within a reasonable size range. Using three phase windings can effectively increase the output torque of the motor while achieving a great torque output even at a low rotational speed.

Next, the working principle of such a motor will be explained. As shown in Fig. 3, the magnetic ring 21 and the plurality of teeth 11' are shown in a linearly deployed form for easy understanding. Taking a two-phase motor as an example, for each phase wire, the winding directions of the coils 31 on two adjacent tooth groups 11 along the circumferential direction of the tooth groups 11 are opposite. When the rotor 2 is rotated by energizing the wire 3, the coil 31 on a tooth 11' of the A-phase wire 3 generates an N-pole magnetic field and the tooth 11' is aligned with the critical point O of the pole S, at this time, an N magnetic field and an S magnetic field are generated by the two adjacent teeth 11', respectively, as the two adjacent teeth 11' are wound by the B-phase wire 3, and the two corresponding coils 31 are wound in opposite winding directions. As shown, the N-pole magnetic field on the left side attracts the pole S, and the S-pole magnetic field on the right side repels the pole S. The oppositely directed magnetic fields generated by adjacent phase wires 3 generate push and pull forces respectively, enabling the tooth group 11 corresponding to the A-phase wire to cross the critical point O with a great force, and causing the magnetic ring 21 to move in the direction denoted by the arrow.

The motor of this embodiment has at least one of the following advantages:

(1) A single-phase motor finds it difficulty to achieve a great torque, and is only suitable for low-power products, such as hand-held fans, computer cooling fans, small desk fans, etc., because it has to rely on the rotational inertia of the rotor to pass through the critical point where the rotor poles and teeth are aligned, but these products will have obvious electromagnetic noise when used.

However, compared with the single-phase motor, the motor of the present disclosure has an increased number of phases. When the tooth group 11 corresponding to a particular phase wire 3 reaches the critical point O, the coils 31 located on two sides of the tooth group 11 in the other phase wires 3 can generate oppositely directed magnetic fields due to their opposite winding directions, which can respectively generate push and pull effects on the tooth group 11 reaching the critical point O, and thus can make the tooth group 11 corresponding to the A-phase wire cross the critical point O with a great force. Therefore, such a motor can realize a great torque and can be applied to high-power products.

(2) A traditional three-phase motor operates by sequentially energizing the U, V, and W windings in a cross-supply configuration. Stable rotation under load requires switching the energization among the windings following six regular patterns, during which one winding is consistently left unenergized and performs no work, which makes the maximum utilization of the windings and the core only about 66%. The combination and working principle of such a three-phase motor result in its low limit efficiency, and frequent switching of energization will bring great working noise. Moreover, as the windings are energized alternately and intermittently, the reaction force generated by the magnetic pull of the core causes jitter inside the core, and the motor will easily produce high-frequency vibration when switching at a high speed, which causes poor working stability and affects the service life of the bearing. However, compared with the traditional three-phase motor, in the motor of the present disclosure, the phase wires 3 are independent from each other, so that independent power supply and driving can be realized, and each phase wire 3 can be energized all the time to cause the rotor 2 to rotate, and the utilization of the windings and the stator core can reach 100%, thereby increasing the limit working efficiency of the motor. Moreover, the energization of the phase wires 3 does not need to be frequently switched, which improves the working stability of the motor and reduces the working noise. In addition, a steady and continuous power supply during operation ensures that the reaction force generated by the magnetic pull of stator core 1 aligns consistently with the rotation direction. This results in uniform force distribution under steady state driving conditions, minimizing internal vibration within stator core 1, thereby enhancing the motor's operational stability and extending its overall service life.

(3) The basic formula of the traditional three-phase motor design is: the number of teeth of the motor = (number of poles /2) * 3, that is, the number of teeth corresponding to an 8-pole magnetic ring is: (8/2) * 3 = 12.

Compared with the traditional three-phase motor, in the motor of the present disclosure, assuming that there is one tooth 11' in each tooth group 11, and the total number of teeth 11' is $Z$, where $Z = P * X$, then for a two-phase motor, if the stator core 1 also has 12 teeth 11', the number of poles $P$ is calculated as $P = 12/2 = 6$. By comparison, for the same number of teeth, the motor of the present disclosure can have a reduced number of poles $P$ of the magnetic ring 21, and for the same rotational speed and power, it is necessary to switch the energization twice to complete the rotation of a pair of poles, which can reduce the driving frequency and thus reduce the driving difficulty.

(4) The stator assembly of the traditional three-phase motor exiting the automatic production line has two wire ends, the input wire end and the output wire end, and the wires are irregular and messy. The production process requires a flexible assembly station, where the wires are cut manually to define six wire ends, and then the wire ends are welded in the manner of star or triangle connection, and finally three output wire ends of the U, V and W phase wires are reserved. There are many intersecting coils in such a stator assembly, causing difficulty in automatic winding.

However, compared with the traditional three-phase motor, in the motor of the present disclosure, the same phase wire 3 is wound in sequence, and the winding method is simple; because the X phase wires 3 are independent from each other, the X phase wires can be fully automatically wound with a first end and a second end respectively, so that the winding is reduced, and the next process can be entered without manual trimming, thereby improving the automation degree of winding, and consequently improving the production efficiency and the winding success rate.

In this embodiment, the forward and reverse rotation of the motor can be realized by adjusting the sequence in which the X phase wires 3 are driven, and the forward rotation of the motor can be realized by sequentially applying the driving signals in sequence of the first to X-th phase wires 3 (forward rotation can be defined as counterclockwise or clockwise rotation); and the reverse rotation of the motor can be realized by sequentially applying the driving signals in sequence of the X-th to first phase wires 3.

For example, for a two-phase motor, if the driving signals are applied in the sequence of X1 phase wire and then X2 phase wire and the motor rotates forward, then the motor rotates reversely if the driving signals are applied in the sequence of the X2 phase wire and then the X1 phase wire.

For example, for a three-phase motor, if the driving signals are applied sequentially in the sequence of X1-X2-X3 and the motor rotates forward, then the motor rotates reversely if the driving signals are applied sequentially in the sequence of X3-X2-X1.

In some embodiments, as shown in Figs. 2 and 5, a tooth group 11 includes a single tooth 11', and the wire 3 is wound around the tooth 11' to form a coil 31 on the tooth 11'.

In an example, the tooth groups 11 in the stator core 1 each include only a single tooth 11'. As shown in Fig. 2, the tooth 11' includes a neck 111 and a shoe 112. In some embodiments, the cross section of the neck 111 may be circular, elliptical, triangular, rectangular or other polygons, etc. The shoe 112 is connected to the neck 111 in the form of an arc shape, and the shoe 112 is connected to a radial end of the neck 111, such as an inner radial end or an outer radial end. The coil 31 is wound around the neck 111, with two radial ends blocked and limited by the yoke 12 and the shoe 112 respectively.

As shown in Fig. 2, all the teeth 11' have the same shape and size, and are evenly distributed along the circumferential direction of the stator core 1 at intervals; and as shown in Fig. 13, the teeth 11' corresponding to different phase wires 3 have different sizes, that is, different circumferential coverage angles.

The structure offers straightforward winding, facilitates precise tension control, and lowers the demands on winding process.

In some embodiments, a tooth group 11 includes at least two teeth 11', which are arranged at an interval along the circumferential direction of the stator core 1, and the wire 3 is wound around the at least two teeth 11' to form a coil 31. In an implementation, all the teeth 11' in one tooth group 11 are wound as a whole with the same phase wire 3 to form a coil 31 on the tooth group 11.

Usually, in order to increase the motor torque, the arc length of the shoe 112 can be increased, but the coil 31 is wound around the neck 111 and can only cover the position of the neck 111, thereby the space between the necks 111 of adjacent teeth 11' cannot be used. In this embodiment, the coil 31 is wound around at least two teeth 11' together, so that the coil 31 can fully cover the space between adjacent tooth groups 11 in the circumferential direction of the stator core 1, thereby improving the magnetic flux strength, which facilitates increasing the motor torque.

Alternatively, some tooth groups 11 in the stator core 1 include only a single tooth 11', and the other tooth groups 11 include at least two teeth 11'. This structure can be flexibly configured according to the performance demand of the motor.

In some embodiments, each phase wire 3 is configured to be applied with an independent driving signal. As a result, the driving signals to all the phase wires 3 are not related to each other. In an example, the driving signal can be a continuous sine wave, intermittent sine wave, or square wave, etc. When the driving signal is commutated, the magnetic force generated by the coil 31 is commutated.

In this embodiment, the driving signals applied to the phase wires 3 are independent of each other, provided that there is a particular phase difference between the driving signals, so that each phase wire 3 can be energized all the time to rotate the rotor 2. In this way, the utilization of the winding and the stator core can reach 100%, thus increasing the limit working efficiency of the motor. Moreover, the energization of the phase wires 3 does not need to be frequently switched, which can reduce the working noise. In addition, a steady and continuous power supply during operation ensures that the reaction force generated by the magnetic pull of stator core 1 aligns consistently with the rotation direction. This results in uniform force distribution under steady state driving conditions, minimizing internal vibration within stator core 1, thereby enhancing the motor's operational stability and extending its overall service life.

In some embodiments, in a radial direction of the stator core 1, the winding directions of the coils 31 formed by the at least two phase wires 3 are the same. For example, as shown in Fig. 2, all the coils 31 are wound from the inside to the outside in the radial direction. Alternatively, all the coils 31 may be wound from the outside to the inside in the radial direction.

With the winding mode of this embodiment, it is unnecessary to consider the winding pattern of a specific phase wire 3, and a uniform winding direction is adopted in the radial direction, which is beneficial to improving the efficiency of automatic winding.

In some embodiments, the initial winding positions of each of the coils 31 formed by the at least two phase wires 3 are located on the side away from the rotor 2. As shown in Fig. 2, for an outer rotor motor, the magnetic ring 21 is sleeved over the stator core 1, and the initial winding position of each coil 31 is located on a radially inner side of the stator core 1. In some other configurations, the stator core 1 is annular, the magnetic ring 21 is located within the stator core 1, and the initial winding position of each coil 31 is located on a radially outer side of the stator core 1.

This embodiment takes into account the fact that other components such as the magnetic ring 21 and a Hall sensor are provided at the rotor side, the initial winding position is set on the side away from the rotor 2, so as to avoid the influence of wiring on the moving components.

In some embodiments, in the radial direction of the stator core 1, both the first end and the second end of the at least two phase wires 3 are led out from the same side of the tooth groups 11. In an example, all the first and second ends may be led out from the radially outer side or the radially inner side of the stator core 1.

In addition, both the first end and the second end are led out from tooth slots formed between adjacent tooth groups 11.

In this embodiment, the first end and the second end of the phase wires 3 can be led to the electrical interface of the motor conveniently, so that the led-out wires of the stator core 1 can be arranged more orderly in the motor.

In some embodiments, in the circumferential direction of the stator core 1, all the first and second ends are led out from multiple adjacent tooth groups 11.

Fig. 2 shows the stator core 1 of a two-phase motor, where the first end of the wire 3 is the input end, and the second end is the output end. The two input ends are denoted as X1-IN and X2-IN respectively, and the two output ends are denoted as X1-OUT and X2-OUT, respectively. The two input ends and two output ends are led out from four adjacent tooth groups 11. For example, the lead-out sequence in the circumferential direction is X2-IN, X1-IN, X2-OUT, and X1-OUT, respectively.

Fig. 10 shows the stator core 1 of a three-phase motor, where the first end of the wire 3 is the input end, the second end is the output end, the three input ends are denoted as X1-IN, X2-IN, and X3-IN respectively, the three output ends are denoted as X1-OUT, X2-OUT, and X3-OUT, respectively, and the three input ends and the three output ends are led out from six adjacent tooth groups 11. For example, the lead-out sequence in the circumferential direction is X3-IN, X2-IN, X1-IN, X3-OUT, X2-OUT, and X1-OUT, respectively.

In this embodiment, all the first ends and the second ends are all located in close proximity to one another within a certain area. In automatic winding, it is easier to control the layout positions of a plurality of wires, and it is also convenient to lead the plurality of wires to the electrical interface of the motor in an orderly manner, which is beneficial to mass production.

In some embodiments, the winding directions of the coils 31 with the same sequence number starting from the first end are identical for at least two phase wires 3 along the circumferential direction of the tooth groups 11.

Taking a two-phase motor as an example, Fig. 2 depicts a schematic diagram of the two-phase motor. The first end is the input end, and the second end is the output end. The two input ends are X1-IN and X2-IN respectively, and the two output ends are X1-OUT and X2-OUT respectively. The number of tooth groups 11 is 8, and the X1-phase wire 3 is wound around four tooth groups 11, numbered 1, 2, 3 and 4 in sequence, and the X2- phase wire 3 is wound around four tooth groups 11, numbered 1, 2, 3 and 4 in sequence. Among them, the winding directions of the X1-phase and X2-phase wires 3 on the tooth groups 11 with the same number (e.g., both numbered 1) are identical. This holds true for tooth groups numbered 2, 3, and 4 as well.

Thus, X1-IN and X2-IN are led out from the tooth slots on the same circumferential side of adjacent tooth groups 11 along the stator core 1, that is, from the adjacent tooth slots; and X1-OUT and X2-OUT are also led out from the tooth slots on the same circumferential side of adjacent tooth groups 11 of the stator core 1, that is, from the adjacent tooth slots, where X1-IN and X2-OUT are led out from the same tooth slot.

In this embodiment, the at least two phase wires 3 follow the same winding pattern, which is equivalent to replicating the winding mode of a single phase wire 3, and can simplify the winding mode, thus improving the automatic winding efficiency.

In some other embodiments, for at least one group of two adjacent phase wires 3, the winding directions of the coils 31 with the same sequence number from the first end are opposite along the circumferential direction of the tooth groups 11.

Taking a two-phase motor as an example, on the basis of Fig. 2, if the winding directions of X1 and X2 are opposite, X1-IN and X2-IN need to be led out from tooth slots on different circumferential sides of adjacent tooth groups 11 along the stator core 1, that is, the slots from which X1-IN and X2-IN are led out are separated by one slot; and X1-OUT and X2-OUT also need to be led out from tooth slots on different circumferential sides of adjacent tooth groups 11 along the stator core 1, that is, from the same tooth slot.

In the alternating energization control mode, it is necessary to short-circuit the two output ends X1-OUT and X2-OUT to be connected with three half-bridge driving circuits on the circuit board in correspondence. This winding mode can lead out the two output ends from the same tooth slot, which is convenient for short-circuit and can better adapt to the layout of the circuit board in the alternating energization control mode.

In some embodiments, at least two phase wires

3 are sequentially wound in the sequence from the first phase to the X-th phase along the circumferential direction of the stator core 1. The wires 3 to which the driving signals are applied include the i-th phase wire 3 and the k-th phase wire 3, and the phase difference between the driving signal to the i-th phase wire 3 and the driving signal to the k-th phase wire 3 is $\theta_{ik} = \frac{P}{2} \sum_{i}^{k-1} \beta_X$, where $1 \leq i < k \leq X$.

In the same stator core 1, a gap is present between the tooth group 11 of the x-th phase wire 3 and the adjacent tooth groups 11 on both sides at their closest positions, and the gap has a central position in the circumferential direction of the stator core 1. Among all gaps formed by the Z tooth groups 11, the central angle corresponding to the arc between two adjacent central positions of the x-th phase wire 3 in the circumferential direction of the stator core 1 is $\beta_X$, and the sector corresponding to $\beta_X$ includes at least part of the tooth groups 11 of the x-th phase wire 3. In some embodiments, the value of $\beta_X$ ranges from 1° to 180°.

Specifically, as shown in Figs. 1 to 18, there is only one stator core 1, and the winding sequence of at least two phase wires 3 is 1, ...x..., X, where $1 < x < X$, and two phase wires 3 applied with the driving signals may or may not be adjacent. A gap is present between the tooth group 11 of the x-th phase wire 3 and the adjacent tooth groups 11 on both sides at their closest positions. For example, the tooth group 11 only includes a single tooth 11', and the tooth 11' includes a neck 111 and a shoe 112, the shoe 112 is connected to the radial end of the neck 111 to form a T-shaped structure, and a gap is formed between the shoes 112 of the adjacent teeth 11'. The sector corresponding to $\beta_X$ of the x-th phase wire 3 only includes one tooth group 11 where the phase wire 3 is located.

$\theta_{ik}$ is used to indicate the phase difference of program driving. Controlling the commutation of the driving program within this degree will commutate the magnetic force generated by the coil 31, and as long as $\beta_X$ corresponds to the phase difference of program driving, it can be ensured that the corresponding rotor magnetic field is just at the commutation position when the program driving signal is commutated.

For a two-phase motor, i = 1, k = 2, and $\theta_{ik} = \theta_{12}$, which is used to indicate the phase difference between the X1 phase and X2 phase driving signals, where $\theta_{12} = \frac{P}{2} \beta_1$.

For a three-phase motor, there may be the following three sets of values:

i = 1, k = 2, and $\theta_{ik} = \theta_{12}$, which is used to indicate the phase difference between the X1 phase and X2 phase driving signals, where $\theta_{12} = \frac{P}{2} \beta_1$;

i = 2, k = 3, and $\theta_{ik} = \theta_{23}$, which is used to indicate the phase difference between the X2 phase and X3 phase driving signals, where $\theta_{23} = \frac{P}{2} \beta_2$; and

i = 1, k = 3, and $\theta_{ik} = \theta_{13}$, which is used to indicate the phase difference between the X1 phase and X3 phase driving signals, and the two phases applied with the driving signals are not adjacent, where

$$\theta_{13} = \frac{P}{2} (\beta_1 + \beta_2) .$$

This embodiment can conveniently calculate the phase difference between driving signals applied to different phases according to the structural parameters of the magnetic ring 21 and the stator core 1, so as to accurately and stably control the rotation process of the motor.

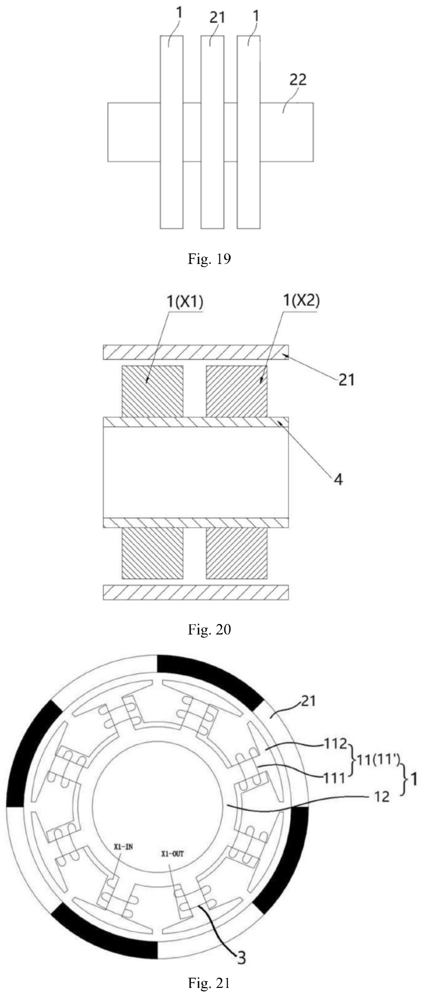

In some embodiments, as shown in Figs. 20 to 23, a plurality of stator cores 1 are stacked axially, and each stator core 1 includes at least one phase wire 3. In the circumferential direction of the stator cores 1, the respective tooth groups 11 of the plurality of stator cores 1 are staggered.

Specifically, the number of tooth groups 11 in the plurality of stator cores 1 may be the same or different. In this structure, the total number of all tooth groups 11 in all stator cores 1 is Z, and the total phase number of all wires 3 is X, where Z=P*X. If the plurality of stator cores 1 are projected in a reference plane perpendicular to the axis of the motor, this is equivalent to providing Z tooth groups 11 and X phase wires 3 for a single stator core 1. The thickness of the magnetic ring 21 may be consistent with the sum of the axial dimensions of the plurality of stator cores 1. There is a gap between the adjacent stator cores 1 to accommodate the wires 3 wound around the adjacent stator cores 1. In order to ensure insulation, the wires 3 on the adjacent stator cores 1 are not in contact.

For example, there are two stator cores 1, each stator core 1 is wound with one phase wire 3, and the winding directions of adjacent tooth groups 11 in the same stator core 1 along the circumferential direction of the tooth groups 11 are opposite, providing a two-phase motor; or there are three stator cores 1, and each stator core 1 is wound with one phase wire 3, providing a three-phase motor; or there are two stator cores 1, one stator core 1 is wound with one phase wire 3, and the other stator core 1 is wound with two phase wires 3, providing a three-phase motor.

As shown in Fig. 20, two stator cores 1 are stacked in the axial direction. In order to facilitate the installation and ensure the coaxiality of the two stator cores 1, a connecting shaft 4 passes through central through holes of the two stator cores 1.

Fig. 21 is a schematic diagram showing an X1 phase wire 3 being wound around one of the stator cores 1 as shown in Fig. 20. In this stator core 1, the winding directions of the coils 31 on two adjacent tooth groups 11 along the circumferential direction of the tooth groups 11 are opposite, and X1-IN and X1-OUT are respectively led out from the two adjacent tooth groups 11.

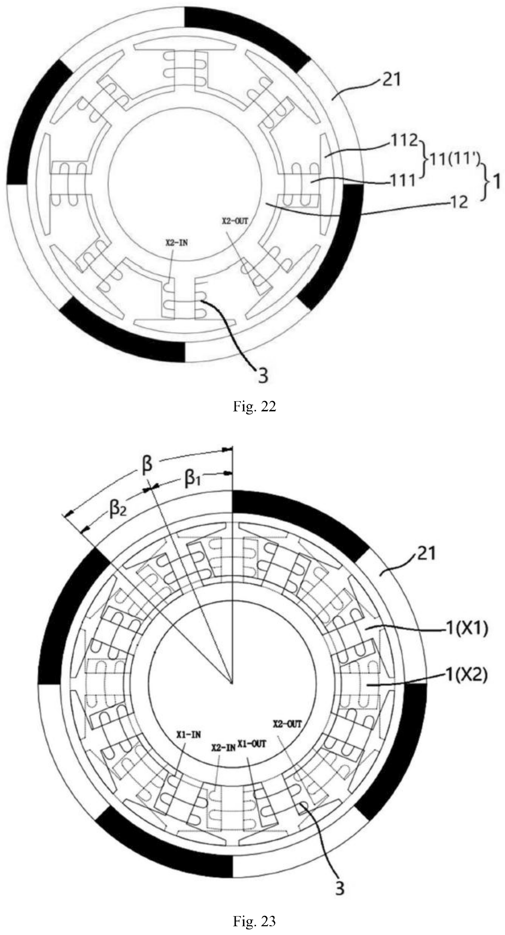

Fig. 22 is a schematic diagram showing an X2 phase wire 3 being wound around the other one of the stator cores 1 as shown in Fig. 20. In this stator core 1, the winding directions of the coils 31 on two adjacent tooth groups 11 along the circumferential direction of the tooth groups 11 are opposite, and X2-IN and X2-OUT are respectively led out from the two adjacent tooth groups 11.

Fig. 23 is a schematic structural diagram showing two stator cores 1 stacked along the axial direction. The axial length of the magnetic ring 21 can cover the two stator cores 1, and the tooth groups 11 of the two stator cores 1 are staggered in the circumferential direction. Specifically, there is one tooth 11' in each tooth group 11. Assume that the two stator cores 1 are projected to the same plane in the axial direction and are considered as one stator core 1, in the circumferential direction of the stator core 1, the necks 111 of the two adjacent teeth 11' and the coils wound around them are completely staggered, and the shoes 112 of the two adjacent teeth 11' overlap in the circumferential direction. X1-IN, X2-IN, X1-OUT, and X2-OUT are respectively led out from four adjacent teeth 11' on the two stator cores 1.

Such a motor still satisfies the condition Z=P*X. For example, the number of poles P of the magnetic ring 21 is denoted as P = 8, the number X of phases of the phase wires 3 is denoted as X=2, the number of tooth groups 11 of each stator core 1 is 8, and the total number Z of tooth groups 11 of the two stator cores 1 is denoted as Z = 16.

For such a motor, when determining $\beta_X$, a gap is formed between two adjacent tooth groups 11 in the same stator core 1. Among all gaps formed by the Z tooth groups 11, the central angle corresponding to the arc between the central position of the x-th phase wire 3 and the adjacent central position in the circumferential direction of the stator core 1 is $\beta_X$, and the two gaps for forming $\beta_X$ are located in the two stator cores 1 respectively. Moreover, the sector corresponding to $\beta_X$ includes both the tooth group 11 of the x-th phase wire 3 and the tooth groups 11 of other phase wires 3.

On the basis of unchanged performance, in the motor of this embodiment, the number of tooth groups 11 in each stator core 1 can be reduced, thereby increasing the interval between adjacent tooth groups 11 and reducing the processing difficulty of a single stator core 1. Moreover, the number of winding phases of a single stator core 1 is correspondingly reduced, which can reduce the winding difficulty of a single stator core 1. On the basis of improving the performance of the motor, the performance parameters can be improved by expanding the axial dimension of the motor without increasing the radial dimension of the motor.

In some embodiments, in the whole target rotational speed range of the rotor 2, the driving signals applied to all phase wires 3 have the same strength. The strength of a driving signal is characterized by the amplitude of the driving signal. In addition, the driving signals applied to all phase wires 3 have the same frequency.

The driving mode of this embodiment is mainly suitable for the case of a small number of motor phases. In order to meet the demands of working indicators, all phases should be energized in any working condition, which can give full play to the capacity of the motor.

In some embodiments, in a case where the target torque of the rotor 2 is greater than a first preset torque, the driving signals applied to each phase wire 3 have the same strength.

In a case where the target torque of the rotor 2 is not higher than the first preset torque, the driving signals applied to some phase wires 3 have a preset strength, and the driving signals applied to the other phase wires 3 have a strength lower than the preset strength or these wires are not driven.

For example, in the case of a great number of motor phases, such as 5 phases, it is generally necessary to realize a great torque at a low rotational speed, that is, the target torque is greater than the first preset torque, and the driving signals can be simultaneously applied to the 5 phase wires 3. Generally, at a high rotational speed, only a small torque is needed, that is, the target torque is not greater than the first preset torque, and the 1st, 3rd and 5th phase wires of the 5 phase wires 3 can be energized and driven, whereas the 2nd and 4th phase wires are not driven or driven by a weak current. The torque is related to the number of driven phases and the amplitude of the driving signal, while rotational speed is related to the frequency of the driving signal. Such a motor can be used as the power motor of automobile to realize a specific driving mode by increasing the number of phases, so as to solve the technical problem of difficulty in selecting the power motor.

The driving mode of this embodiment is mainly suitable for a wide on-load torque range. By increasing the number of phases, some phases can be driven or all phases can be driven flexibly according to the torque demand in actual work, which enables the motor to meet the performance demands in different working conditions and reduces the difficulty of motor selection.

In this embodiment, when the motor is working, the strengths (characterized by amplitudes) of the driving signals applied to the phase wires 3 are allowed to be different, but the frequencies of the driving signals applied to the phase wires 3 are the same. By applying driving signals of different strengths to the phase wires 3, not only is it possible to adapt to the demands of different working conditions as mentioned above, but also the efficiency can be maximized in the control. Specifically, the motor has on-load inertia in the working process, and reducing the driving current at a proper time will reduce the driving torque. The output torque of the motor can be compensated by the on-load inertia, and the efficiency can be maximized and the power consumption can be reduced by this control method.

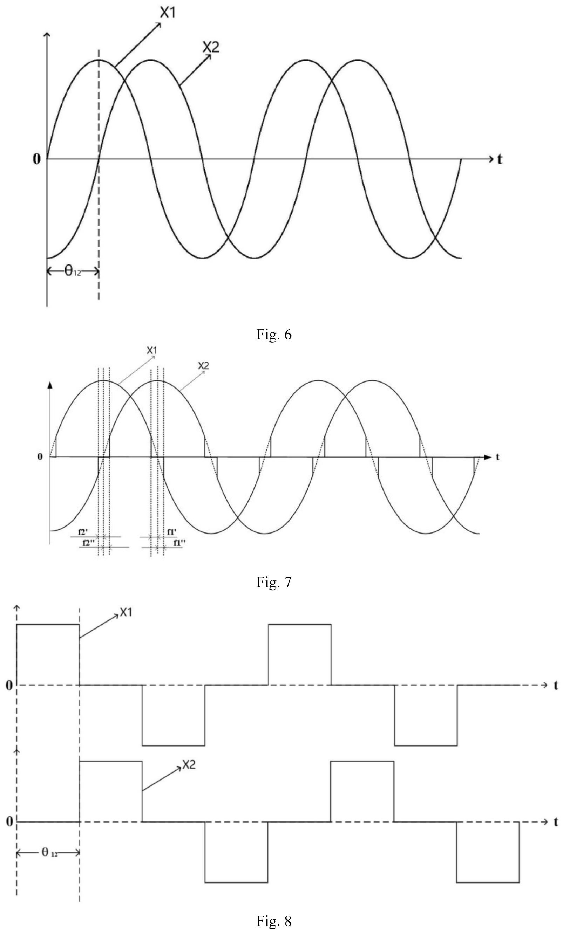

In some embodiments, as shown in Fig. 6, the motor has a first working mode, in which each phase wire 3 is energized all the time, and there is a phase difference between the driving signals to adjacent phase wires 3.

Such a motor adopts the driving mode of cross-energization, in which each phase wire 3 is applied with continuous driving signals, and there is a phase difference between the driving signals to adjacent phase wires 3. The driving signals may be sine waves, square waves or other continuous waveforms, and different driving waveforms can be realized by an electronic commutator, such as a thyristor, Mos, or IGBT. The commutation phase difference between the driving signals may range from 1° to 180°. The advantages of sine wave driving include low driving noise, good linearity, and higher efficiency in the cases of large torque or acceleration. The advantages of square wave driving are that the position sensor has a simple structure and low cost, the position signal only needs to be processed logically, and the output torque can be increased.

In this embodiment, the winding of the motor is continuously energized, and the utilization of the winding and the stator core can reach 100%, thus improving the working efficiency of the motor. Moreover, the energization of the phase wires 3 does not need to be frequently switched, so that the working noise can be reduced. In addition, a steady and continuous power supply during operation ensures that the reaction force generated by the magnetic pull of stator core 1 aligns consistently with the rotation direction. This results in uniform force distribution under steady state driving conditions, minimizing internal vibration within stator core 1, thereby enhancing the motor's operational stability and extending its overall service life.

In some embodiments, as shown in Figs. 7 and 8, the motor has a second working mode, in which each phase wire 3 is energized intermittently, and there is a phase difference between the driving signals to adjacent phase wires 3.

Such a motor adopts the driving mode of alternating energization, and each phase wire 3 is applied with discontinuous driving signals, and there is a phase difference between the driving signals to adjacent phase wires 3. Taking a two-phase motor as an example, as shown in Fig. 7, the driving signal is a discontinuous sine wave; and as shown in Fig. 8, the driving signal is a square wave.

Referring to Fig. 7, the driving signal to the first phase wire can be obtained by advancing the commutation position of the continuous sine wave signal by the phase angle f1' and lagging it by the phase angle f1", and the driving signal to the second phase wire can be obtained by advancing the commutation position of the continuous sine wave signal by the phase angle f2' and lagging it by the phase angle f2".

The driving signal provided to each phase wire 3 commutates when the shoe 112 of the tooth group 11 around which the phase wire 3 is wound is aligned with the critical point of the pole, in some embodiments. However, in practice, there may be errors due to various causes (e.g., an error in the magnetic ring annular average distribution angle of the brushless motor due to production; also, e.g., an error in the driving detection of the brushless motor), which leads to the fact that it is impossible to accurately control the commutation point to happen at the moment right opposite to the critical point of the pole, but rather ahead of or behind this moment to some extent, which will make the winding do useless work in the period ahead of or behind this moment, thus reducing the efficiency of the brushless motor.

By providing discontinuous driving signals, the useless work done by the winding can be reduced, thus improving the efficiency of the brushless motor.

Referring to Fig. 8, the control with a driving signal with a square waveform is simpler. Therefore, the control can be further simplified by using the driving signal with a square waveform to drive the brushless motor in the mode of alternating energization.

The winding of the motor in this embodiment is energized intermittently, which can increase the output torque of the motor, and the control is simple, and the driving control cost can be reduced with specific design matching. Although such a motor will slightly reduce the utilization of the stator core and the winding, it is still superior over the brush motors on the market at present, and the utilization of the stator core and the winding of most brush motors is only about 30%.

For the above-mentioned cross-energization and alternating energization, the control program and the position of Hall detection for the motor are different, the calculation and consideration of the internal winding of the motor are different, and the output power of the motor is also different in the two driving modes, so a motor generally uses one driving mode. For the demand of a specific motor, if the cost is not a priority, the driving mode of alternating energization combined with cross-energization can be adopted. For example, for a power motor, alternating energization is used to improve the torque at low speed, and cross-energization is used to improve the efficiency at high speed, so as to meet the use demand of the motor more comprehensively.

It should be understood that it is only illustrated schematically above that the driving signal conforms to a sine function in the cross-energization driving mode, while the waveform of the driving signal is a square wave in the alternating energization driving mode, and the embodiments of the present disclosure are not limited thereto.

In some embodiments, the brushless motor can be driven by one of the two driving modes, namely, cross-energization and alternating energization. In some other embodiments, the brushless motor can alternatively be driven by a combination of cross-energization and alternating energization.

According to the positional relationship between the stator core 1 and the rotor 2, the embodiments of three motors of different structures are given below.

In some embodiments, as shown in Figs. 1 and 2, the magnetic ring 21 is sleeved over the stator core 1.

The tooth 11' includes a neck 111 and a shoe 112 which are connected to form a T-shape. The neck 111 is connected to the outer peripheral wall of the yoke 12, and the shoe 112 is arranged at the outer radial end of the neck 111, with a gap between the shoe 112 and the magnetic ring 21.

In the outer rotor motor of this embodiment, because the arm of force of the magnetic force generated by energizing the coil 31 is greater, a greater torque can be achieved with a particular circumferential dimension.

In some embodiments, as shown in Figs. 4 and 5, the stator core 1 is annular and sleeved over the magnetic ring 21. The tooth 11' includes a neck 111 and a shoe 112 which are connected to form a T-shape. The neck 111 is connected to the inner peripheral wall of the yoke 12, and the shoe 112 is arranged at the inner radial end of the neck 111, with a gap between the shoe 112 and the magnetic ring 21.

The inner rotor motor of this embodiment can achieve a greater rotational speed with a particular circumferential dimension, and because the coil 31 is located outside the magnetic ring 21, the heat dissipation is better and the maintenance is convenient. For example, the inner rotor motor can be used in electric vehicles and other scenarios that are demanding in heat dissipation and need convenient assembly.

In some embodiments, as shown in Figs. 15 to 19, the stator core 1 and the magnetic ring 21 are stacked axially and the magnetic ring 21 at least partially covers the coil 31 in the radial direction of the stator core 1.

Fig. 15 is a schematic structural diagram of the stator core 1. The yoke 12 has an annular disk-shaped structure, and a plurality of tooth groups 11 are arranged at the end of the yoke 12. For example, one tooth group 11 only includes a single tooth 11', and each tooth 11' is substantially trapezoidal, and four corners of the trapezoidal tooth may be rounded, and the radially inner and outer sides may be arc-shaped. The wire 3 is wound around the tooth 11'.

Fig. 16 is a schematic structural diagram of a magnetic ring, and Fig. 17 shows a structure in which the stator core 1 and the magnetic ring 21 are stacked axially, and the magnetic ring 21 at least partially covers the coil 31 in the radial direction of the stator core 1, accordingly, the magnetic ring 21 needs to have a greater width. In order that the magnetic force generated by the energization of the coil 31 can effectively act on the magnetic ring 21, the magnetic ring 21 completely covers the coil 31 in the radial direction of the stator core 1. The rotating shaft 22 is connected to the central area of the magnetic ring 21, and the rotating shaft 22 extends beyond the stator core 1 and the magnetic ring 21.

The planar motor of this embodiment is small in size, flat and thin in overall shape, and applicable for scenarios with limited installation space, and can realize high torque and high power.

In some embodiments, as shown in Fig. 18, magnetic rings 21 are provided on both sides of the stator core 1 in the axial direction; as shown in Fig. 19, stator cores 1 are provided on both sides of the magnetic ring 21 in the axial direction; alternatively, the motor includes a plurality of stator cores 1 and a plurality of magnetic rings 21, and the stator cores 1 and the magnetic rings 21 are alternately arranged in the axial direction, so that both sides of the stator cores 1 in the axial direction are provided with the magnetic rings 21, and both sides of the magnetic rings 21 in the axial direction are provided with the stator cores 1.

The motor of this embodiment can achieve a greater torque, thereby improving the power density.

Secondly, the present disclosure provides an apparatus including the motor of the above embodiment. For example, the apparatus can be applied in the fields of electric servo driving, information processing, transportation, household appliances, consumer electronics, national defense, special purposes, and the like.

Because the motor of the embodiment of the present disclosure has better comprehensive performance, such as increased torque and power, improved working efficiency, improved working stability and service life, reduced working noise, reduced number of poles for the same number of teeth and consequently reduced driving difficulty, improved winding automation degree and efficiency, etc., such a motor can well meet the driving demands of different apparatuses in different fields, and selection of the motor type becomes easier.

Finally, the present disclosure provides a manufacturing method for the motor based on the above embodiment. Referring to Fig. 2, in some embodiments, the manufacturing method includes:

a wire supply step: providing a wire 3;
a winding step: winding the wire 3 on the tooth groups 11 in a phase sequence until a coil 31 is formed on each tooth group 11; where for all the coils 31 corresponding to the same phase wire 3, the number of tooth groups 11 spaced between the coils 31 on two adjacent tooth groups 11 is X-1, and the winding directions of the coils 31 on two adjacent tooth groups 11 along the circumferential direction of the tooth groups 11 are opposite; and
a wire cutting step: cutting the wire 3 at the joint of adjacent phase sequences, so that the total number of phases of the phase wire 3 is X, and each phase wire 3 has an independent first end and second end.

Taking the two-phase motor shown in Fig. 2 as an example, a wire 3 is wound around every other tooth group 11 sequentially starting from X1-IN, and the winding directions of adjacent tooth groups 11 along the circumferential direction of the tooth groups are opposite. After a whole turn of winding is completed and being led out from X1-OUT, the wire 3 continues to be wound at the position of X2-IN, and it is still wound around every other tooth group 11 sequentially until it is led out from X2-OUT. Finally, the wire between X1-OUT and X2-IN is broken to form X1 and X2 phase wires 3.

This embodiment uses one wire 3 to wind around all phases without interruption, which is beneficial to realizing automatic winding. Moreover, the same phase wire 3 are wound sequentially, and the winding method is simple. Because the phase wires 3 are independent from each other, the phase wires 3 can be fully automatically wound with a first end and a second end, so that the winding is reduced, and the next process can be entered without manual trimming, so that the automation degree of winding can be improved, and the production efficiency and the winding success rate can be improved.

Some specific embodiments of the motor of the present disclosure are given below.

In the first embodiment, as shown in Figs. 1 and 2, the motor includes a stator core 1, which includes a yoke 12 and a plurality of tooth groups 11. The plurality of tooth groups 11 are arranged evenly at intervals along the circumferential direction of the stator core 1 and connected to the outer periphery of the yoke 12. The yoke 12 is annular, and each tooth group 11 includes a single tooth 11'. The tooth 11' includes a neck 111 and a shoe 112, and the shoe 112 is connected to the outer radial end of the neck 111 to form a T-shaped structure.

The magnetic ring 21 is coaxially sleeved over the stator core 1, and in such an outer rotor motor, because the arm of force of the magnetic force generated by energizing the coil 31 is greater, a greater torque can be achieved with a particular circumferential dimension.

Two phase wires 3 are wound around the teeth 11' to form coils 31 on the teeth 11', and each phase wire 3 has an independent first end and second end. For example, the X1 phase wire 3 has X1-IN and X1-OUT, and the X2 phase wire 3 has X2-IN and X2-OUT. For the same phase wire 3, the number of teeth 11' spaced between two adjacent coils 31 is 1, and the winding directions of the two adjacent coils 31 along the circumferential direction of the teeth 11' are opposite, and the two adjacent coils 31 are connected through the connecting section 32. X2-IN, X1-IN, X2-OUT, and X1-OUT are led out from four adjacent teeth 11' along the circumferential direction.

For example, when the number P of poles of the magnetic ring 21 is selected as P=4 and the total number X of phases of the phase wire 3 is selected as X=2, the remaining structures and driving parameters are designed as follows:

the number Z of the teeth 11' is denoted as $Z=P*X=4\times2=8$;

the monopole included angle $\beta$ of the magnetic ring 21 is denoted as $\beta=360°/P=360°/4=90°$;

the central angles corresponding to the arcs between the central positions of the gaps at two sides of the teeth 11' where X1 and X2 phase wires are located in the circumferential direction of the stator core 1 are denoted as $\beta_1=\beta_2=45°$; and

the phase difference $\theta_{12}$ between two phases of driving signals is denoted as $\theta_{12}=2\times45°=90°$.

Based on the above structure, when winding, the X1 phase wire 3 corresponds to the teeth 11' numbered 1, 3, 5, and 7, and is alternately and reversely wound along the circumferential direction of the teeth 11' to form two led-out wires X1-IN and X1-OUT; the X2 phase wire 3 corresponds to the teeth 11' numbered 2, 4, 6, and 8, and is alternately and reversely wound along the circumferential direction of the teeth 11' to form two led-out wires X2-IN and X2-OUT. The four led-out wires correspond to the four wiring ports for two-phase driving on the driving board.

As shown in Fig. 6, the driving signal of the two-phase motor is a continuous sine wave. For example, the amplitude and frequency of the two-phase sine wave can be the same, and the phase difference is 90° and the phase difference can be accurately controlled by software. In addition, the data of motor driving is calculated in advance by software, and then the driving waveform is output according to the rotational speed demand of the motor, so as to accurately control the various independent power supplies.

Each phase wire 3 is energized all the time, and the driving mode is cross-energizing. Two independent waveforms with a phase difference of 90° can be switched once each to realize the rotation of a pair of N-pole and S-pole rotors. The driving is simple and the switching is stable, which can increase the working efficiency of the motor, improve the working stability and overall service life of the motor, and reduce the working noise. For different loads within the rated working range, the motor can be directly used without debugging. In the driving signal with one cycle per phase, the direction of the driving signal needs to be switched four times.

As shown in Fig. 7, the driving signal of the two-phase motor is a discontinuous sine wave.

As shown in Fig. 8, the driving signal of the two-phase motor is an intermittent square wave, and the driving mode is alternating energization, which can increase the output torque of the motor, simplify the control difficulty, and reduce the cost.

The driving of the motor of the present disclosure is alternating current driving, and there are three solutions for realizing two alternating current inputs:

1. The motor can be directly driven by changing the single-phase alternating current into two-phase alternating current with a 90° phase difference between the two phases using the output of AC alternating current combined with the principle of capacitor phase shifting. At this time, the frequency of the alternating current is 50 Hz, so the rotational speed of the motor in this solution is constant, and the frequency of the alternating current has to be changed in order to control the rotational speed of the motor, so this solution has difficulty in speed regulation.

2. The AC alternating current is inverted into direct current with a predetermined voltage through AC-DC switching power source, and then inverted into alternating current with a predetermined voltage through MOS transistor control, and then divided into two alternating currents with a phase difference of 90° to supply power to the motor, so that driving can be realized. This solution is relatively simple in speed regulation.

3. The AC alternating current is changed into 310V direct current through a rectifier bridge, the 310V direct current is then inverted into alternating current with a specified voltage through MOS transistor control, and the alternating current is then divided into two alternating currents with a phase difference of 90° to supply power to the motor, so that driving can be realized. This solution is also simple in speed regulation.

In the second embodiment, as shown in Figs. 4 and 5, the difference from the first embodiment is that the neck 111 is connected to the inner peripheral wall of the yoke 12, and the shoe 112 is provided at the inner radial end of the neck 111. Such an inner rotor motor can achieve a great rotational speed with a particular circumferential dimension, and because the coil 31 is located outside the magnetic ring 21, the heat dissipation is better and the maintenance is convenient. The winding mode and driving mode of the second embodiment can be known from the first embodiment.

In the third embodiment, as shown in Figs. 9 and 10, the difference from the first embodiment is that three phase wires 3 are wound around the teeth 11' to form coils 31 on the teeth 11', and each phase wire 3 has an independent first end and second end. For example, the X1 phase wire 3 has X1-IN and X1-OUT, the X2 phase wire 3 has X2-IN and X2-OUT, and the X3 phase wire 3 has X3-IN and X3-OUT. For the same phase wire 3, the number of teeth 11' spaced between two adjacent coils 31 is two, and the winding directions of the two adjacent coils 31 along the circumferential direction of the teeth 11' are opposite, and the two adjacent coils 31 are connected through the connecting section 32. X3-IN, X2-IN, X1-IN, X3-OUT, X2-OUT, and X1-OUT are led out from the adjacent six tooth groups 11 along the circumferential direction.

For example, when the number of poles $P$ of the magnetic ring 21 is selected as $P=4$ and the total number X of phase wires 3 is selected as X=3, the remaining structures and driving parameters are designed as follows:

the number Z of teeth 11' is denoted as Z=P*X=4×3=12;
the monopole included angle β of the magnetic ring 21 is denoted as β=360°/P=360°/4=90°; and
the central angles corresponding to the arcs between the central positions of the gaps at two sides of the teeth 11' where X1, X2, or X3 phases are located in the circumferential direction of the stator core 1 are denoted as $\beta_1 = \beta_2 = \beta_3 = 30°$.

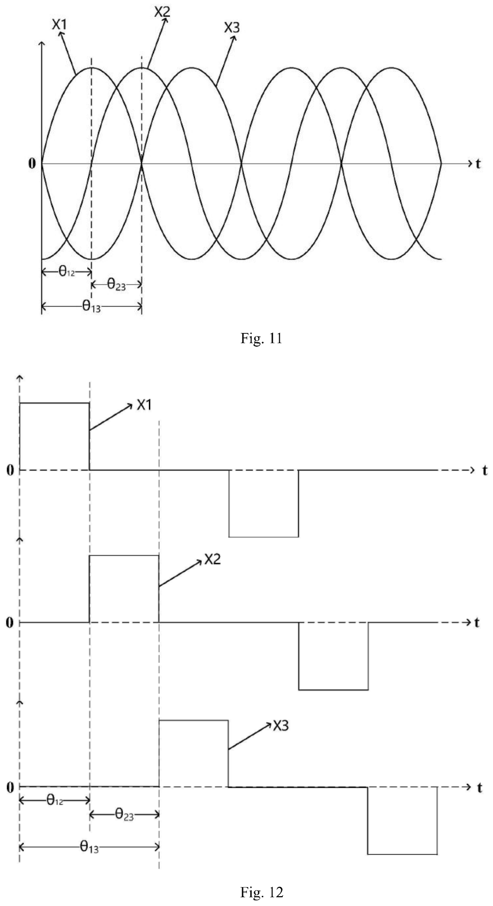

As shown in Fig. 11, in the three phases of driving signal, the phase difference $\theta_{12}$ between X1 and X2 phases is denoted as $\theta_{12} = 2 \times 30° = 60°$; the phase difference $\theta_{23}$ between X2 and X3 phases is denoted as $\theta_{23} = 2 \times 30° = 60°$; and the phase difference $\theta_{13}$ between X1 and X3 phases is denoted as $\theta_{13} = 2 \times 60° = 120°$.

The driving signal of the three-phase motor is a continuous sine wave, and the amplitude and frequency of the three phases of sine waves can be the same, and the phase difference between adjacent two phases of driving signals is 60°. Each phase wire 3 is energized all the time, and the driving mode is cross-energization.

As shown in Fig. 12, the driving signal of the two-phase motor is an intermittent square wave, and the amplitude and frequency of the three phases of square waves can be the same. The calculation method of the phase difference between the three phases of driving signals is the same as that in Fig. 11, and the phase difference between adjacent two-phase driving signals is 60°. Each phase wire 3 is energized intermittently and alternatively, and the driving mode is alternating energization.

Compared with the two-phase motor, the three-phase motor can achieve a greater driving torque. During operation, all the three phase wires 3 can be energized, or only some of the phase wires 3 can be energized according to the actual torque demand.

In the fourth embodiment, as shown in Figs. 13 and 14, the difference from the first embodiment is that the spaces occupied by the teeth 11' corresponding to different phase wires 3 in the circumferential direction of the stator core 1 are different, that is, the teeth 11' corresponding to different phase wires 3 are unevenly distributed in the circumferential direction of the stator core 1, but the teeth 11' corresponding to the same phase wire 3 are evenly distributed in the circumferential direction of the stator core 1. For example, the arc length of the shoe 112 of the tooth 11' corresponding to the X1-phase wire 3 is smaller than that of the shoe 112 of the tooth 11' corresponding to the X2-phase wire 3.

The number Z of the teeth 11' is denoted as Z=P*X=4×2=8;

the monopole included angle β of the magnetic ring 21 is denoted as β=360°/P=360°/4=90°;
the central angles corresponding to the arcs between the central positions of the gaps at two sides of the teeth 11' where X1 and X2 phase wires are located in the circumferential direction of the stator core 1 are denoted as $\beta_1 = 22.5°$ and $\beta_2 = 67.5°$; and
the phase difference $\theta_{12}$ between two phases of driving signals is denoted as $\theta_{12} = 2 \times 22.5° = 45°$.

As shown in Fig. 14, the driving signals of the two-phase motor are continuous sine waves. For example, the amplitude and frequency of the two phases of sine waves can be the same, and the phase difference is 45°. Each phase wire 3 is energized all the time, and the driving mode is cross-energization, which can increase the working efficiency of the motor, improve the working stability and overall service life of the motor, and reduce the working noise. In the driving signal with one cycle per phase, the direction of the driving signal needs to be switched four times.

In the fifth embodiment, as shown in Figs. 15 to 19, the difference from the first embodiment is that the yoke 12 has an annular disk structure, and a plurality of tooth groups 11 are arranged at the end of the yoke 12. For example, the tooth group 11 includes only a single tooth 11', and the general shape of each tooth 11' is trapezoidal, four corners of the trapezoid may be rounded, and the radially inner and outer sides can be provided in the shape of an arc. The wire 3 is wound around the outer periphery of the tooth 11'.

Fig. 16 is a schematic structural diagram of a magnetic ring, and Fig. 17 shows a structure in which the stator core 1 and the magnetic ring 21 are stacked axially, and the magnetic ring 21 at least partially covers the coil 31 in the radial direction of the stator core 1. In some embodiments, in order that the magnetic force generated by energizing the coil 31 can effectively act on the magnetic ring 21, the magnetic ring 21 completely covers the coil 31 in the radial direction of the stator core 1. The outer diameters of the stator core 1 and the magnetic ring 21 may be the same. Such a planar motor is small in size, flat and thin in overall shape, and applicable for scenarios with limited installation space, and can realize high torque and high power.

As shown in Fig. 18, magnetic rings 21 are provided on both sides of the stator core 1 in the axial direction; as shown in Fig. 19, stator cores 1 are provided on both sides of the magnetic ring 21 in the axial direction; alternatively, the motor includes a plurality of stator cores 1 and a plurality of magnetic rings 21, and the stator cores 1 and the magnetic rings 21 are alternately arranged in the axial direction.

For the above-mentioned embodiments, in addition to the advantages listed above, the use of this motor does not need debugging and development for the motor, driving circuit board, driving program, and load. Once the rotational speed and power of a motor are selected, the corresponding driving control board can be selected to achieve maximum efficiency driving. Because the driving signal of such a motor corresponds to the rotational speed and the magnetic ring, the precise commutation can be determined comprehensively by the Hall sensor and the in-chip program, and it is no longer necessary to precisely debug the commutation time point when the same motor drives different loads. A simple logic can be added to the built-in program to realize the determination in advance and ensure the maximum efficiency of the motor. For example, a motor with an output power of 20W and a rotational speed of 1500 rpm can drive various fan blade loads of about 5W to 15W, and can approach or reach the maximum 99% efficiency point without secondary debugging.

However, the six switching processes of a traditional three-phase motor are realized by a complex Foc (Field Oriented Control) algorithm. If secondary debugging is not performed for the load, the efficiency of the motor will be greatly reduced. For example, a traditional three-phase motor with an output power of 20W and a rotational speed of 1500 rpm may have an efficiency of less than 90% or even less than 80% when a load is working at 15W if secondary debugging is not performed when driving various fan blades of 5w to 15W. If secondary debugging is performed, the maximum efficiency can be greater than 95%, and the motor debugged by different people will have different maximum efficiency points.

Although some specific embodiments of the present disclosure have been described in detail by examples, it should be understood by those skilled in the art that the above examples are intended only for illustration and are not intended to limit the scope of the present disclosure. Those skilled in the art should understand that the above embodiments can be modified or some technical features can be replaced by equivalents without departing from the scope and spirit of the present disclosure. The scope of the present disclosure is defined by the appended claims.

## Claims

1. A brushless motor comprising:

    a stator core (1) comprising a plurality of tooth groups (11) arranged at intervals along a circumferential direction of the stator core (1), the total number of the tooth groups (11) being $Z$;
    a rotor (2) rotatable relative to the stator core (1) and comprising a magnetic ring (21) with $P$ poles, $P$ being an even number; and
    at least two phase wires (3) wound around the plurality of tooth groups (11) to form a respective one of a plurality of coils (31), the total number of the at least two phase wires (3) being $X$, and each phase wire (3) having a first end and a second end independent of each other; for the same phase wires (3), the number of tooth groups (11) spaced between the coils (31) on two adjacent tooth groups (11) being $X$-1, and the winding directions of the coils (31) on the two adjacent tooth groups (11) along the circumferential direction of the tooth groups (11) being opposite;
    where $Z=P*X$.

2. The brushless motor of claim 1, wherein:

    at least one of the plurality of tooth groups (11) comprises a single tooth (11'), and the wire (3) is wound around the tooth (11') to form a coil (31) on the tooth (11'); and/or

at least one of the plurality of tooth groups (11) comprises at least two teeth (11') arranged at intervals along the circumferential direction of the stator core (1), and the wire (3) is wound around the at least two teeth (11') to form a coil (31) on the at least two teeth (11').

3. The brushless motor of claim 1, wherein each phase wire (3) is configured to be applied with an independent driving signal.

4. The brushless motor of claim 1, wherein in a radial direction of the stator core (1), the winding direction of each coil (31) formed by at least two phase wires (3) is the same.

5. The brushless motor of claim 4, wherein an initial winding position of each coil (31) formed by at least two phase wires (3) is located at a side away from the rotor (2).

6. The brushless motor of claim 1, wherein in the radial direction of the stator core (1), both the first end and the second end of each of the at least two phase wires (3) are led out from the same side of the tooth group (11).

7. The brushless motor of claim 1, wherein in the circumferential direction of the stator core (1), the first end and the second end of all of the at least two phase wires (3) are led out from a plurality of adjacent tooth groups (11).

8. The brushless motor of claim 7, wherein:

   the winding directions of the coils (31) with the same sequence number along the circumferential direction of the tooth groups (11) starting from the first end are identical for the at least two phase wires (3); or
   for at least one group of adjacent two phase wires (3),the winding directions of the coils (31) with the same sequence number from the first end are opposite along the circumferential direction of the tooth groups (11).

9. The brushless motor of claim 1, wherein the at least two phase wires (3) are sequentially wound along the circumferential direction of the stator core (1) in a sequence from a first phase to a X-th phase;

   the wires (3) each applied with a respective driving signal comprise an i-th phase wire (3) and a k-th phase wire (2), and a phase difference $\theta_{ik}$ between the driving signal to the i-th phase wire (3) and the driving signal to the k-th phase wire (2) is denoted as $\theta_{ik} = \frac{P}{2}\sum_{i}^{k-1}\beta_X$, where

$1 \leq i < k \leq X$; and

in the same stator core (1), a gap is present between the tooth group (11) of the x-th phase wire (3) and adjacent tooth groups (11) on both sides at their closest positions, and the gap has a central position in the circumferential direction of the stator core (1); in all gaps formed by the Z tooth groups (11), a central angle corresponding to an arc between the central position of the x-th phase wire (3) and an adjacent central position in the circumferential direction of the stator core (1) is $\beta_X$, and a sector corresponding to $\beta_X$ comprises at least part of the tooth group (11) of the x-th phase wire (3).

10. The brushless motor according to any one of claims 1 to 9, wherein a plurality of stator cores (1) are stacked axially, and each of the plurality of stator cores (1) comprises at least one phase wire (3), and a plurality of tooth groups (11) staggered in the circumferential direction of the stator cores (1).

11. The brushless motor according to any one of claims 1 to 9, wherein in a whole target rotational speed range of the rotor (2), the driving signals applied to all phase wires (3) have the same strength.

12. The brushless motor according to any one of claims 1 to 9, wherein:

   in a case where a target torque of the rotor (2) is higher than a first preset torque, the driving signals applied to the phase wires (3) have the same strength; and
   in a case where the target torque of the rotor (2) is not higher than the first preset torque, the driving signals applied to some phase wires (3) have a preset strength, and the driving signals applied to the other phase wires (3) have a strength lower than the preset strength or the other phase wires are not driven.

13. The brushless motor according to any one of claims 1 to 9, wherein the brushless motor has a first working mode, in which each phase wire (3) is energized all the time with the driving signals to adjacent phase wires (3) having a phase difference.

14. The brushless motor according to any one of claims 1 to 9, wherein the brushless motor has a second working mode, in which each phase wire (3) is energized intermittently, with the driving signals to adjacent phase wires (3) having a phase difference.

15. The brushless motor according to any one of claims 1 to 9, wherein
   the magnetic ring (21) is sleeved over the stator core (1).

16. The brushless motor according to any one of claims 1 to 9, wherein the stator core (1) is annular and sleeved over the magnetic ring (21).

17. The brushless motor according to any one of claims 1 to 9, wherein the stator core (1) and the magnetic ring (21) are stacked along an axial direction, and the magnetic ring (21) at least partially covers the coils (31) along a radial direction of the stator core (1).

18. The brushless motor of claim 17, wherein:

    the magnetic ring (21) comprises a plurality of magnetic rings (21) arranged on both sides of the stator core (1) along an axial direction; and/or
    the stator core (1) comprises a plurality of stator cores arranged on both sides of the magnetic ring (21) along the axial direction.

19. An apparatus comprising the brushless motor according to any one of claims 1 to 18.

20. A manufacturing method for a brushless motor according to any one of claims 1 to 18, comprising:

    a wire supply step: providing a wire (3);
    a winding step: winding the wire (3) around the plurality of tooth groups (11) in a phase sequence until a coil (31) is formed on each of the plurality of tooth groups (11); for all the coils (31) on the same phase wire, the number of tooth groups (11) spaced between the coils (31) on two adjacent tooth groups (11) being $X$-1, and the winding directions of the coils (31) on two adjacent tooth groups (11) along the circumferential direction of the tooth groups (11) being opposite; and
    a wire cutting step: cutting the wire (3) at a joint of adjacent phase sequences, so that the total number of phases of the wire (3) is $X$, and each phase wire (3) has a first end and a second end independent of each other.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

## INTERNATIONAL SEARCH REPORT

| International application No. |
| --- |
| **PCT/CN2024/092621** |

**A.    CLASSIFICATION OF SUBJECT MATTER**

H02K3/46(2006.01)i;   H02K3/52(2006.01)i;   H02K29/00(2006.01)i

According to International Patent Classification (IPC) or to both national classification and IPC

**B.    FIELDS SEARCHED**

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 无刷电机, 磁极, 数, 齿, 相, 线圈, 转子, 定子, brushless motor, phase, tooth, pole 1w number

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116979734 A (XUXIN TECHNOLOGY (SHENZHEN) GROUP CO., LTD.) 31 October 2023 (2023-10-31)<br>claims 1-20 | 1-20 |
| PX | CN 220421526 U (XUXIN TECHNOLOGY (SHENZHEN) GROUP CO., LTD.) 30 January 2024 (2024-01-30)<br>claims 1-19 | 1-19 |
| X | CN 114865818 A (PENG MING et al.) 05 August 2022 (2022-08-05)<br>description, paragraphs 6-110, and figures 1-38 | 1-20 |
| A | CN 106787312 A (GUANGXI NANNING KAIDELI ELECTRONIC SCIENCE & TECHNOLOGY CO., LTD.) 31 May 2017 (2017-05-31)<br>entire document | 1-20 |
| A | JP 2007306668 A (ASMO CO., LTD.) 22 November 2007 (2007-11-22)<br>entire document | 1-20 |
| A | US 2010148612 A1 (ASMO CO., LTD.) 17 June 2010 (2010-06-17)<br>entire document | 1-20 |

☐ Further documents are listed in the continuation of Box C.        ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **04 July 2024** | **11 July 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/092621** |

| Patent document cited in search report | | | Publication date (day/month/year) | Patent family member(s) | | | Publication date (day/month/year) |
| --- | --- | --- | --- | --- | --- | --- | --- |
| CN | 116979734 | A | 31 October 2023 | None | | | |
| CN | 220421526 | U | 30 January 2024 | None | | | |
| CN | 114865818 | A | 05 August 2022 | None | | | |
| CN | 106787312 | A | 31 May 2017 | None | | | |
| JP | 2007306668 | A | 22 November 2007 | None | | | |
| US | 2010148612 | A1 | 17 June 2010 | DE | 102009058424 | A1 | 01 July 2010 |
| | | | | JP | 2010252530 | A | 04 November 2010 |
| | | | | JP | 2010263763 | A | 18 November 2010 |
| | | | | JP | 2010288349 | A | 24 December 2010 |

Form PCT/ISA/210 (patent family annex) (July 2022)